**Europäisches Patentamt**

**European Patent Office**

**Office européen des brevets**

(11) Veröffentlichungsnummer: **0 287 703 B1**

(12) **EUROPÄISCHE PATENTSCHRIFT**

(45) Veröffentlichungstag der Patentschrift: **13.05.92**

(21) Anmeldenummer: **87112665.2**

(22) Anmeldetag: **31.08.87**

(51) Int. Cl.⁵: **H05K 5/06**, H01R 13/52

(54) **Dichtung.**

(30) Priorität: **14.03.87 DE 3708393**

(43) Veröffentlichungstag der Anmeldung:
**26.10.88 Patentblatt 88/43**

(45) Bekanntmachung des Hinweises auf die
Patenterteilung:
**13.05.92 Patentblatt 92/20**

(84) Benannte Vertragsstaaten:
**AT BE CH FR GB GR IT LI NL SE**

(56) Entgegenhaltungen:
**EP-A- 0 157 938**
**EP-A- 0 169 329**
**DE-A- 851 218**
**DE-A- 3 208 299**

(73) Patentinhaber: **Steuerungstechnik Staiger
GmbH u. Co. Produktions-Vertriebs-KG**

**W-7121 Erligheim(DE)**

(72) Erfinder: **Staiger, Bruno
Rosenfeld 107
W-7121 Erligheim(DE)**
Erfinder: **Schoch, Klaus, Ing. grad.
Erwin-Habold-Strasse 5
W-7100 Heilbronn-Horkheim(DE)**

## Beschreibung

Die Erfindung betrifft eine Anordnung mit einer gummielastischen Dichtung Dichtung mit den Merkmalen des Oberbegriffs des Anspruchs 1.

Eine derartige gegen Feuchtigkeit, Schmutz oder dergleichen wirksame Anordnung besitzt dahingehende technische Funktionserweiterungen, daß eine Leiterplatte mit elektrischen und/oder elektronischen Bauteilen im Dichtungselastomer integriert eingebettet ist, wodurch verschiedene zusätzliche Funktionen, wie z.B. Leuchtanzeigen, Schutzbeschaltungen und dergleichen, in kompakter dichtungsbaueinheitlicher Ausführung erzielt werden können.

Die Aufgabe der Erfindung besteht darin, eine Anordnung mit gummielastischen Dichtung mit den Merkmalen des Oberbegriffs des Anspruchs 1 dahingehend weiterzubilden, daß eine einfache und kostengünstige Herstellung und Montage erzielt wird.

Diese Aufgabe wird erfindungsgemäß durch die kennzeichnenden Merkmale des Anspruchs 1 gelöst.

Zweckmäßig Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt.

Es stellen dar:

FIG. 1    eine erfindungsgemäße Anordnung in Einbaulage zwischen einem Magnetkopf-Anschlußteil und einer Gerätesteckdose in geschnittener Seitenansicht,

FIG. 2    ein Teil der Anordnung gemäß FIG. 1 in vergrößerter Darstellung,

FIG. 3    die Anordnung gemäß FIG. 1 in Vorderansicht,

FIG. 4    die Anordnung gemäß FIG. 3 in Rückansicht,

FIG. 5    die Anordnung gemäß dem Schnitt V-V der FIG. 3 in vergrößerter Darstellung,

FIG. 6    die Anordnung gemäß dem Schnitt VI-VI der FIG. 4 in vergrößerter Darstellung,

FIG. 7    die erfindungsgemäße Anordnung in einer anderen Ausführungsform in Einbaulage zwischen einem Magnetkopf-Anschlußteil und einer Gerätesteckdose in geschnittener Seitenansicht ähnlich FIG. 1,

FIG. 8    die Dichtung gemäß FIG. 7 in geschnittener Seitenansicht in einer aufgeklappten Fertigungs-Zwischenstufe,

FIG. 9    die Anordnung gemäß FIG. 7 in Vorderansicht,

FIG.10    die Anordnung gemäß FIG. 9 in Rückansicht und

FIG.11    die Anordnung gemäß dem Schnitt XI-XI der FIG. 9 in vergrößerter Darstellung.

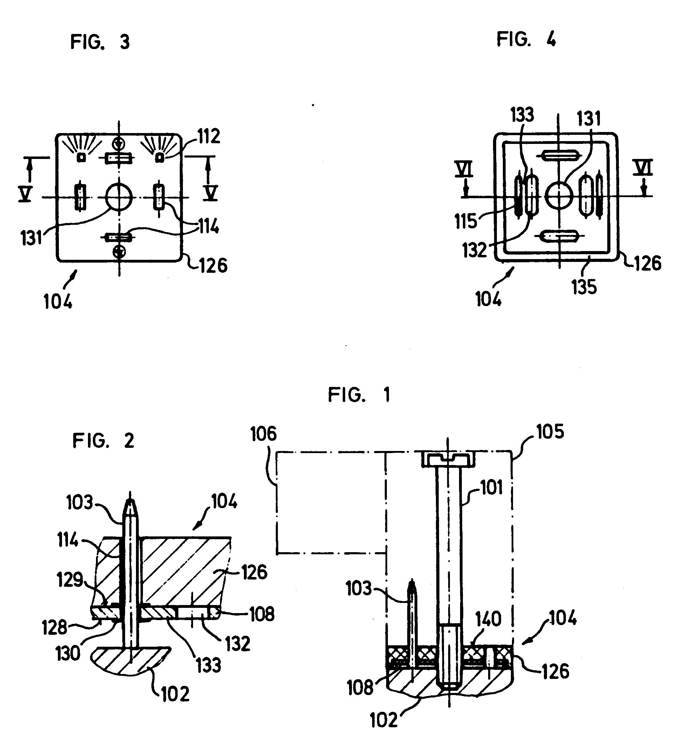

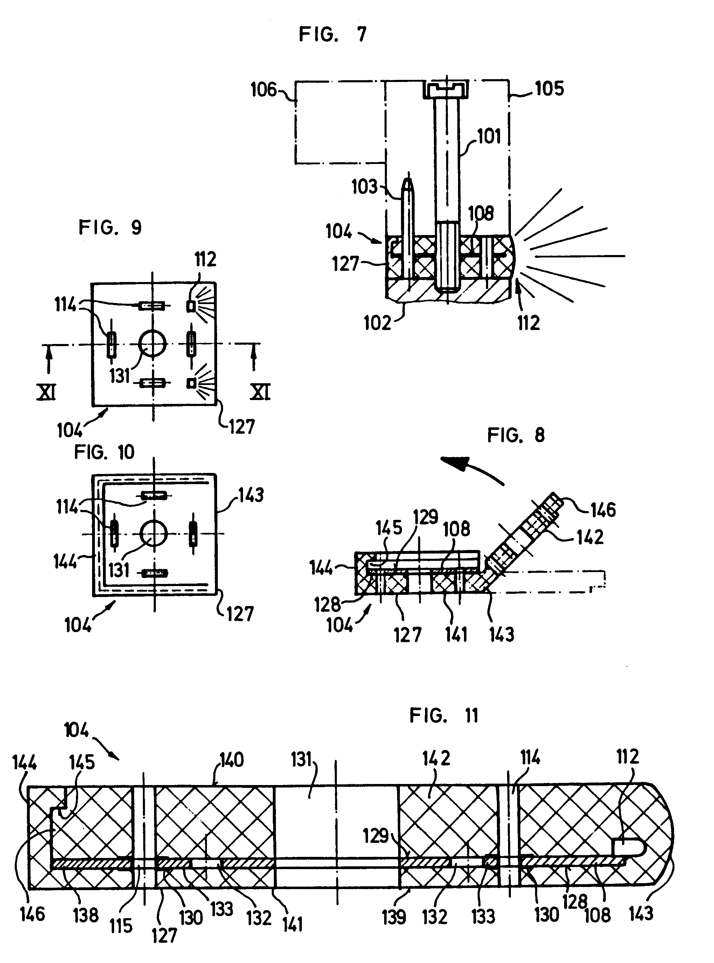

Der in den FIG. 1 und 7 dargestellte Anschlußteil 102 gehört zu einem Magnetkopf eines (hier nicht dargestellten) Ventils und weist Stecker 103 auf. Die Stecker 103 können bevorzugt als im Querschnitt flachrechteckförmige Steckerzungen ausgeführt sein. Es ist jedoch auch möglich, die Stecker 103 im Querschnitt anders auszubilden und z.B. als im Querschnitt kreisringförmige Rundsteckerzapfen auszuführen. Die Stecker 103 durchsetzen eine Flachdichtung 104, die zwischen dem Anschlußteil 102 und einer elektrischen Gerätesteckdose 105 angeordnet ist. Die Flachdichtung 104 kann vorzugsweise etwa 1 bis 3 mm dick sein. Es ist aber auch möglich, die Flachdichtung 104 dünner oder dicker auszubilden.

Die bevorzugt genormte Gerätesteckdose 105 besitzt eine Sicherungsschraube 101, die die Gerätesteckdose 105 und die Flachdichtung 104 durchsetzt und in ein Muttergewinde des Anschlußteils 102 eingreift, so daß die Gerätesteckdose 105 am Ventil-Magnetkopf lösbar festgelegt ist. Die Stecker 103 des Anschlußteils 102 greifen in hier nicht sichtbare Kontaktbuchsen der Gerätesteckdose 105 ein. Durch die Flachdichtung 104 wird gewährleistet, daß keine Feuchtigkeit oder anderweitige Verschmutzungen in den Bereich der Steckkontaktierung gelangen. An der Einführung 106 der Gerätesteckdose 105 kann ein hier nicht dargestelltes Elektrokabel angeschlossen werden, um den Magnetkopf über die Kontaktbuchsen der Gerätesteckdose 105 und die die Flachdichtung 104 durchsetzenden Stecker 103 des Anschlußteils 102 mit elektrischer Spannung versorgen zu können.

Die Flachdichtung 104 besteht aus einem lichtdurchlässigen Elastomer, also einer gummielastischen Dichtungsmasse, vorzugsweise Silikonkautschuk. Die Dichtungsmasse ist als vorgeformtes flexibles Formteil ausgebildet. Dieses vorgefertigte Dichtungs-Formeil ist beim Ausführungsteil der FIG. 1 bis 6 als Schnapprahmen 126 und beim Ausführungsbeispiel der FIG. 7 bis 11 als Klapprahmen 127 ausgeführt. In der Ebene, also innerhalb der Dicke der Flachdichtung 104, befindet sich eine Leiterplatte 108, die in den vorgefertigten elastischen Schnapprahmen 126 bzw. Klapprahmen 127 als separat hergestelltes Bauteil nachträglich eingesetzt worden ist. Die Leiterplatte 108 kann zweckmäßig eine gewisse Eigensteifigkeit aufweisen und verhältnismäßig starr sein. Bei besonderen Anwendungen kann es jedoch auch günstig sein, die Leiterplatte 108 biegsam und somit entsprechend flexibel zu gestalten.

Die Leiterplatte 108 kann an einer oder an beiden Plattenflächen 128,129 elektrische Leiterbahnen aufweisen und es können elektrische oder elektronische Bauteile, wie Leuchtdioden 112, Brückengleichrichter sowie Miniaturbauteile (SMD-Bauteile), vorgesehen sein. Die Brückengleichrichter können als Verpolungsschutz für die Leuchtdioden 112 ausgelegt sein, so daß nicht nur beim Wechselspannungsbetrieb, sondern auch beim Gleichspannungsbetrieb die Flachdichtung 104 ohne Beachtung einer besonderen Polrichtung in beliebiger Lage eingebaut werden kann. Die innerhalb der Flachdichtung 104 auf der Leiterplatte 108 vorgesehenen Bauteile können auch so ausgelegt sein, daß anderweitige Funktionsschaltungen, wie Zeitschaltungen, Impulsschaltungen und dergleichen sowie eine Schutzbeschaltung des Magnetkopfes gegen Überspannungen und Induktionsspannungen erzielt werden.

In der Leiterplatte 108 sind bevorzugt rechteckförmige Durchbrüche 115 ausgebildet, durch die die Stecker 103 hindurchgesteckt werden können. Um eine einwandfreie elektrische Kontaktierung mit den Steckern 103 zu gewährleisten, sind in jedem Durchbruch 115 Umkontaktierungen 130 vorgesehen, die sich von der einen Plattenfläche 128 entlang der den Durchbruch 115 begrenzenden Wandung zur anderen Plattenfläche 129 erstrecken und im Querschnitt etwa U-förmig sind (FIG. 2,5,6,11), wobei die freien U-Schenkel an den Plattenflächen 128,129 anliegen und hier mit den Leiterbahnen kontaktiert sein können. Die Flachdichtung 104 besitzt für das Hindurchführen der Stecker 103 ebenfalls Durchgangslöcher 114, die koaxial zu den Durchbrüchen 115 angeordnet sind und ebenfalls einen etwa rechteckförmigen Qauerschnitt aufweisen können. Die lichte Weite der Durchgangslöcher 114 kann etwas größer sein als beim Durchbruch 115, so daß der Stecker 103 das Durchgangsloch 114 weitgehend reibungsarm durchsetzt.

Die Flachdichtung 104 mit der integrierten Leiterplatte 108 kann, wie in der Zeichnung dargestellt, vorteilhaft insgesamt vier Durchgangslöcher 114 und Durchbrüche 115 aufweisen, die gemäß der Steckeranordnung in vorgegebenen Abständen um eine Mittenbohrung 131 herum so angeordnet sind, daß die Flachdichtung 104 und/oder die Gerätesteckdose 105 auch in einer anderen versetzten Position aufgesteckt werden können. Durch die Mittenbohrung 131 ist die Sicherungsschraube 101 hindurchgeführt. Den FIG. 2,4, 5,6,11 ist zudem zu entnehmen, daß in der Leiterplatte 108 Freisparungen 132 ausgebildet sind. Die als Schlitz bzw. Langloch ausgebildete Freisparung 132 befindet sich in einem geringen Abstand parallel neben dem Durchbruch 115. Der zwischen dem Durchbruch 115 und der Freisparung 132 verbleibende stegförmige Plattenteil ist verhältnismäßig dünn bzw. schmal, so daß ein Federbalken 133 gebildet ist, der sich in der Ebene der Leiterplatte 108 nachgiebig verbiegen kann. Beim Einführen des Steckers 103 in den Durchbruch 115, dessen lichte Weite etwas kleiner ist als die Dicke des Steckers 103, kann der Federbalken 133 in Richtung zur Freisparung 132 etwas ausweichen. Der Federbalken 133 steht dabei unter Federvorspannung, die ständig gegen den Stecker 103 wirkt, so daß eine dauerhaft zuverlässige elektrische Kontaktierung gewährleistet ist. Wie der Zeichnung zu entnehmen ist, befindet sich die Freisparung 132 und somit auch der Federbalken 133 im Bereich zwischen dem Durchbruch 115 und der Mittenbohrung 131.

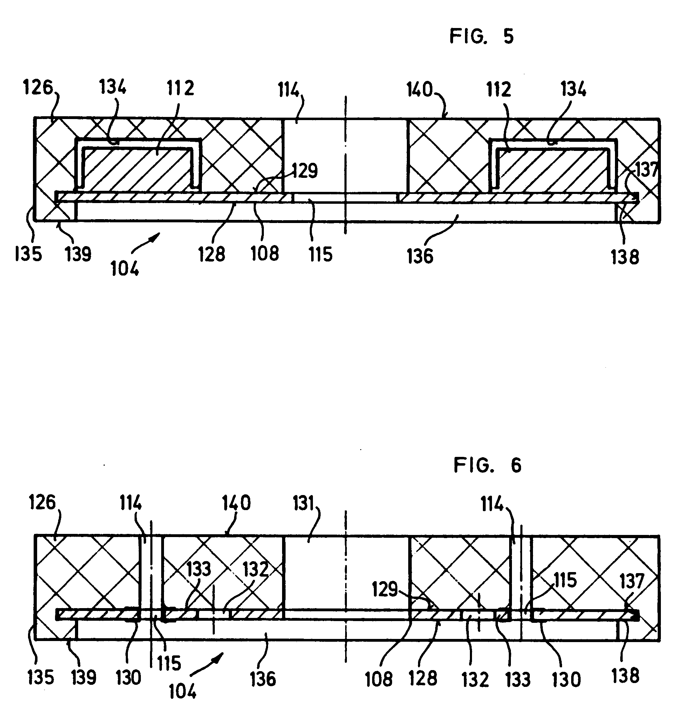

Den FIG. 3 und 9 ist zu entnehmen, daß die Leuchtdioden 112 zweckmäßig in Eckbereichen der bevorzugt quadratischen bzw. rechteckförmigen Leiterplatte 108 und somit auch der Flachdichtung 104 angeordnet sein können. Die FIG. 5 macht deutlich, daß die elektrischen Bauteile und vor allem die Leuchtdioden 112 in einer Ausnehmung 134 innerhalb des elastischen Dichtungsmaterials des Schnapprahmens 126 formschlüssig geschützt gelagert sein können und vorzugsweise an der der Flachdichtung 104 zugewandten Plattenfläche 129 der Leiterplatte 108 kontaktiert sind.

Den FIG. 1,4,5 und 6 ist zu entnehmen, daß der Schnapprahmen 126 an der einen (unteren) Seite einen vorzugsweise rahmenartig umlaufenden elastischen Haltesteg 135 besitzt. Der Haltesteg 135 ist verhältmismäßig schmal ausgeführt, so daß in dessen Ebene im Bereich der einen (unteren) Plattenfläche 128 ein Ausschnitt 136 besteht und die Plattenfläche 128 an dieser unteren Seite weitgehend freiliegt. Der Haltesteg 135 ist etwa hakenförmig (FIG. 5 und 6) ausgeführt und weist eine Nut 137 auf, in der die Leiterplatte 108 mit ihrem Rand 138 formschlüssig gehalten ist. Der Halesteg 135 übergreift somit den Rand 138 der Leiterplatte 108 und liegt an der unteren Plattenfläche 128 an. Die untere Außenfläche des Haltestegs 135 wirkt als Dichtfläche 139, die am Anschlußteil 102 anliegt, aber auch bei um 180° gewendeter Flachdichtung 104 an der Gerätesteckdose 105 anliegen kann. Insbesondere die FIG. 5 und 6 zeigen deutlich, daß die Dicke des Haltestegs 135 von der Dichtfläche 139 bis zu der unteren freien Plattenfläche 128 der Leiterplatte 108 wesentlich kleiner ist als die Dicke des Schnapprahmens 126 an der gegenüberliegenden Seite, also von der anderen Plattenfläche 129 bis zur gegenüberliegenden anderen Dichtfläche 140, mit der die Flachdichtung 104 beim vorliegenden Ausführungsbeispiel (FIG. 1) an der Gerätesteckdose 105 anliegt.

Bei der Herstellung wird so vorgegangen, daß der Schnapprahmen 126 als eigenständiges Formteil und die Leiterplatte 108 mit den Leuchtdioden 112 und dergleichen ebenfalls als eigenständiges Bauteil getrennt voneinander angefertigt werden. Beim Zusammenbau der vorgefertigten Teile wird der gummielastische Schnapprahmen 126 über die Leiterplatte 108 gestülpt, wobei der flexible Haltesteg 135 den Leiterplattenrand 138 formschlüssig übergreift, so daß ein sicherer aber dennoch lösbarer Zusammenhalt der Leiterplatte 108 und des Schnapprahmens 126 gewährleistet ist. Aufgrund der lösbaren Verbindung besteht der zusätzliche Vorteil, die Leiterplatte 108 im Bedarfsfalle aus dem Schnapprahmen 126 herauszunehmen und gegen eine andere, z.B. mit anderen elektronischen Bauteilen bestückte oder anders geschaltete Leiterplatte auszutauschen, so daß eine individuelle Anpassung an unterschiedliche Anforderungen möglich ist.

Die Flachdichtung 104 des in den FIG. 7 bis 11 dargestellten Ausführungsbeispiels ist, vor allem hinsichtlich der Leiterplatte 108, im wesentlichen so ausgeführt, wie beim vorbeschriebenen Ausführungsbeispiel. Ein wesentlicher Unterschied besteht darin, daß die Leiterplatte 108 hier nicht in einem Schnapp-, sondern in einem gummielastischen Klapprahmen 127 gelagert ist.

Der Klapprahmen 127 weist einen Boden 141 und einen Deckel 142 auf. Der Boden 141 und der Deckel 142 können gemäß der Darstellung in FIG. 7 und 8 etwa gleich dick ausgeführt sein. Gemäß der FIG. 11 kann es jedoch auch günstig sein, den Boden 141 dünner auszuführen als den Deckel 142, wobei der Deckel 142 etwa 2 bis 4 mal dicker sein kann als der Boden 141.

Der Boden 141 und der Deckel 142 können zweckmäßig als materialeinheitlich einstückiges, vorgefertigtes Formteil ausgeführt und über ein Scharnier 143 verbunden sein, das bevorzugt als sogenanntes Filmscharnier ausgebildet ist. Das Filmscharnier 143 befindet sich an der einen Längsseite des Klapprahmens 127 der rechteckförmigen bzw. quadratischen Flachdichtung 104, während an den anderen drei Längsseiten des Bodens 141 die Leiterplatte 108 überragende hakenförmige Seitenstege 144 ausgebildet sind, die einen dreiseitigen Rahmenteil bilden und im Hakenbereich einen winkelförmigen Hinterschnitt 145 besitzen. Der hakenförmige Seitensteg 144 übergreift den Deckel 142 an den drei Längsseiten, wobei das freie Hakenende des Seitenstegs 144 in eine randseitige Stufenausnehmung des Deckels 142 eingreift und der Deckelrand im Hinterschnitt 145 des Seitenstegs 144 formschlüssig eingerastet ist (FIG. 11). Die Leuchtdioden 112 können vorteilhaft an dem Rand 138 der Leiterplatte 108 vorgesehen sein, der dem Filmscharnier 143 zugewandt ist bzw. sich im Umschließungsbereich des Filmscharniers 143 befindet, so daß die Leuchtdioden 112 hier besonders geschützt gelagert sind.

Die FIG. 8 zeigt deutlich, daß beim Zusammenbau der Flachdichtung 104 zunächst die Leiterplatte 108 mit ihrer unteren Plattenfläche 128 auf den Boden 141 des vorgefertigten elastischen Klapprahmens 127 aufgelegt wird. Dann wird der über das Filmscharnier 143 angelenkte Deckel 142 umgeschwenkt (PFeilrichtung), bis daß er auf der anderen Plattenfläche 129 der Leiterplatte 108 aufliegt. Die drei Seitenränder 147 des Deckels 142 werden dabei in den Hinterschnitt 145 des Seitenstegs 144 hineingedrückt, wodurch eine lösbare Formschlußverbindung hergestellt ist. Bei Bedarf kann der Deckel 142 aufgeklappt und die Leiterplatte 108 ausgetauscht werden. Zur Erzielung eines unlösbaren Dauerverschlusses kann es jedoch auch günstig sein, im Bereich des Hinterschnitts 145 eine Klebeverbindung vorzusehen, so daß der Seitenrand 146 mit dem Seitensteg 144 dauerhaft fest miteinander verbunden sind.

## Patentansprüche

1. Anordnung mit einer gummielastischen Dichtung, insbesondere Flachdichtung (104), die zwischen zwei Körpern, insbesondere einem Magnetkopf und einer Gerätesteckdose (105), vorgesehen ist, wobei ein oder mehrere elektrische Stecker (103) des einen Körpers in elektrische Kontaktbuchsen des anderen Körpers eingreifen und die Dichtung durchsetzen, und die Anordnung mindestens ein elektrisches Bauteil (112) auf einer elektrischen Leiterplatte (108) aufweist, das mit dem Stecker (103) über die elektrische Leiterplatte kontaktiert ist, die in der Dichtung vorgesehen ist, dadurch gekennzeichnet, daß die Leiterplatte (108) in einen aus der Dichtungsmasse vorgeformten Schnapp-oder Klapprahmen (126,127) eingesetzt ist.

2. Anordnung nach vorstehendem Anspruch, dadurch gekennzeichnet, daß die Leiterplatte (108) in einem Durchbruch (115) eine sich von der einen Plattenfläche (128) entlang der Durchbruchwandung zur anderen Plattenfläche (129) erstreckende Umkontaktierung (130) für den Stecker (103) aufweist.

3. Anordnung nach einem der vorstehenden Ansprüche, dadurch gekennzeichnet, daß in der Leiterplatte (108) neben dem Durchbruch (115) mindestens eine Freisparung (132) ausgebildet und der Plattenteil zwischen dem Durchbruch (115) und der Freisparung (132) als Federbalken (133) ausgeführt ist.

4. Anordnung nach einem der vorstehenden Ansprüche, dadurch gekennzeichnet, daß der Schnapp- oder Klapprahmen (126,127) mehrere in Abständen um eine Mittenbohrung (131) angeordnete Steckerdurchgangslöcher (114) aufweist, die koaxial zu den Durchbrüchen (115) der Leiterplatte (108) ausgebildet sind.

5. Anordnung nach einem der vorstehenden Ansprüche, dadurch gekennzeichnet, daß die Freisparung (132) und der Federbalken (133) der Leiterplatte (108) im Bereich zwischen dem Durchbruch (115) und der Mittenbohrung (131) angeordnet sind.

6. Anordnung nach einem der vorstehenden Ansprüche, dadurch gekennzeichnet, daß das als Leuchtdiode (112) ausgebildete elektrische Bauteil bevorzugt in Eckbereichen der Leiterplatte (108) angeordnet und der Schnapp- oder Klapprahmen (126,127) lichtdurchlässig ist.

7. Anordnung nach einem der vorstehenden Ansprüche, dadurch gekennzeichnet, daß die Leiterplatte (108) mit ihrem Rand (138) in einer Nut (137) des Schnapprahmens (126) formschlüssig gehalten ist, der einen den Rand (138) hakenförmig übergreifenden und an der einen Plattenfläche (128) anliegenden elastischen Haltesteg (135) mit einer Dichtfläche (139) aufweist.

8. Anordnung nach einem der vorstehenden Ansprüche, dadurch gekennzeichnet, daß der Schnapprahmen (126) in der Ebene des die eine Plattenfläche (128) übergreifenden Haltestegs (135) einen Ausschnitt (136) aufweist und das an der gegenüberliegenden Plattenfläche (129) angeordnete elektrische Bauteil (112) in einer Ausnehmung (134) des elastischen Schnapprahmens (126) formschlüssig gelagert ist.

9. Anordnung nach einem der vorstehenden Ansprüche, dadurch gekennzeichnet, daß die Dicke des Haltestegs (135) von der Dichtfläche (139) bis zu der einen (freiliegenden) Plattenfläche (128) kleiner ist als die Dicke des Schnapprahmens (126) von der anderen Plattenfläche (129) bis zur gegenüberliegenden anderen Dichtfläche (140).

10. Anordnung nach einem der vorstehenden Ansprüche, dadurch gekennzeichnet, daß der Klapprahmen (127) einen an der einen Plattenfläche (128) der Leiterplatte (108) anliegenden Boden (141) mit der einen Dichtfläche (139) und einen an der anderen Plattenfläche (129) anliegenden, die andere Dichtfläche (140) aufweisenden Deckel (142) besitzt, der durch Einrastung in einen Hinterschnitt (145) eines rahmenförmigen Seitenstegs (144) des Bodens (141) festgelegt ist.

11. Anordnung nach einem der vorstehenden Ansprüche, dadurch gekennzeichnet, daß der die Leiterplatte (108) umschließende Boden (141) und Deckel (142) des Klapprahmens (127) über ein Scharnier (143) verbunden und bevorzugt einstückig ausgeführt sind.

12. Anordnung nach einem der vorstehenden Ansprüche, dadurch gekennzeichnet, daß das bevorzugt als Leuchtdiode (112) ausgebildete elektrische Bauteil an dem dem Scharnier (143) des Bodens (141) und Deckels (142) zugewandten Rand (138) der Leiterplatte (108) angeordnet ist.

13. Anordnung nach einem der vorstehenden Ansprüche, dadurch gekennzeichnet, daß der den Deckel (142) übergreifende Seitensteg (144) des Bodens (141) an drei Seiten und das Scharnier (143) an der vierten Seite des rechteckigen Klapprahmens (127) vorgesehen sind.

14. Anordnung nach einem der vorstehenden Ansprüche, dadurch gekennzeichnet, daß die Dicke des Deckels (142) gleich oder größer ist als die Dicke des Bodens (141) des Klapprahmens (127).

## Claims

1. Arrangement with a rubber elastic seal, particularly a flat seal (104), which is provided between two bodies, particularly a magnetic head and an appliance socket (105), one or more electric plugs (103) of one body engaging in electric contact bushes of the other body and traversing the seal and the arrangement has at least one electrical component (112) on an electric printed circuit board (108), which is contacted with the plug (103) via the electric circuit board which is provided in the seal, characterized in that the printed circuit board (108) is place a snap-action or hinged frame (126, 127) preshaped from the sealing compound.

2. Arrangement according to the preceding claim, characterized that the printed circuit board (108) has in an opening (115) a recontacting means (130) for the plug (103) extending from one board face (128) along the wall of the opening to the other board face (129).

3. Arrangement according to one of the preceding claims, characterized in that in the circuit board (108), alongside the opening (115), is formed at least one gap (132) and the board part between the opening (115) and the gap (132) is in the form of a spring pole (133).

4. Arrangement according to one of the preceding claims, characterized in that the snap-action or hinged frame (126, 127) has several plug through holes (114) arranged at intervals around a centre bore (131) and which are coaxial to the openings (115) of the circuit (108).

5. Arrangement according to one of the preceding claims, characterized in that the gap (132) and the spring pole (133) of the circuit board (108) are arranged in the area between the opening (115) and the centre bore (131).

6. Arrangement according to one of the preceding claims, characterized in that the electrical component constructed as a light-emitting diode (112) is preferably located in the corner areas of the circuit board (108) and the snap-action or hinged frame (126, 127) is light-permeable.

7. Arrangement according to one of the preceding claims, characterized in that the circuit board (108) is positively held by its edge (138) in a groove (137) of the snap-action frame (126) and which has a holding web (135) with a sealing face (139) engaging in hook-like manner over the edge (138) and bearing on one board face (128).

8. Arrangement according to one of the preceding claims, characterized in that the snap-action frame (126) has in the plane of the holding web (135) engaging over one board face (128) a cutout (136) and the electrical component (112) arranged on the opposite face (129) is positively mounted in a recess (134) of the elastic snap-action frame (126).

9. Arrangement according to one of the preceding claims, characterized in that the thickness of the holding web (135) from the sealing face (139) to a (exposed) board face (128) is smaller than the thickness of the snap-action frame (126) from the other face (129) to the facing, other sealing face (140).

10. Arrangement according to one of the preceding claims, characterized in that the hinged frame (127) has a base (141) with a sealing face (139) bearing on one board face (128) of the circuit board (108) and a cover (142), which has the other sealing face (140) and bearing on the other hoard face (129) and which is seared by locking in an undercut (145) of a frame-like lateral web (144) of the base (141).

11. Arrangement according to one of the preceding claims, characterized in that the base (141) surrounding the circuit board (108) and the cover (142) of the hinged frame (127) are connected by means of a hinge (143) and preferably constructed in one piece.

12. Arrangement according to one of the preceding claims, characterized in that the electrical component preferably constructed as a light-emitting diode (112) is located on the edge (138) of the circuit board (108) facing the hinge (143) of the base (141) and the cover (142).

13. Arrangement according to one of the preceding claims, characterized in that the lateral web (144) of the base (141) engaging over the cover (142) are provided on three sides and the hinge (143) on the fourth side of the rectangular hinged frame (127).

14. Arrangement according to one of the preceding claims, characterized in that the thickness of the cover (142) is the same or larger than the thickness of the base (141) of the hinge frame (127).

**Revendications**

1. Dispositif comprenant un joint élastique en caoutchouc notamment un joint plat (104) placé entre deux organes notamment une tête magnétique et une prise d'appareil (105), une ou plusieurs fiches électriques (103) de l'un des organes se plaçant dans les douilles de contact électriques de l'autre organe, en traversant le joint, et le dispositif comporte au moins un composant électrique (112) sur une plaque de circuit imprimé (108) relié à la fiche (103) par la plaque de circuit imprimé qui est prévue dans le joint, dispositif caractérisé en ce que la plaque de circuit imprimé (108) est placée dans un châssis enclipsable ou rabattable (126, 127) moulé avec une masse d'étanchéité.

2. Dispositif selon la revendication précédente, caractérisé en ce que la plaque de circuit imprimé (8) comporte dans un passage (115), un contact périphérique (130) s'étendant d'une surface de plaque (128) le long de la paroi du passage jusqu'à l'autre surface de la plaque pour la fiche (103).

3. Dispositif selon l'une des revendications précédentes, caractérisé en ce que dans la plaque de circuit imprimé (108), à côté du passage (115), se trouve au moins une découpe (132) et la partie de plaque entre le passage (115) et la découpe (132) est réalisée en forme de branche élastique (133).

4. Dispositif selon l'une des revendications précédentes, caractérisé en ce que le châssis enclipsable ou rabattable (126, 127) comporte plusieurs orifices de passage de fiches (114) distants du perçage central (131) et qui sont coaxiaux aux passages (115) de la plaque de circuit imprimé (108).

5. Dispositif selon l'une des revendications précédentes, caractérisé en ce que la découpe (132) et la branche (133) de la plaque de circuit imprimé (108) sont prévues dans la zone entre le passage (115) et le perçage central (131).

6. Dispositif selon l'une des revendications précédentes, caractérisé en ce que le composant électrique constitué par une diode luminescente (112) est prévu de préférence dans les coins de la plaque de circuit imprimé (108) et le châssis enclipsable ou rabattable (126, 127) est transparent à la lumière.

7. Dispositif selon l'une des revendications précédentes, caractérisé en ce que la plaque de circuit imprimé (108) vient avec son bord (138) dans une rainure (137) du châssis enclipsable (126) en y étant maintenue par une liaison de forme, ce châssis comportant une patte de fixation (135) débordant le bord (138) à la manière d'un crochet et s'appliquant élastiquement contre une surface de plaque (128), cette patte de fixation ayant une surface d'étanchéité (139).

8. Dispositif selon l'une des revendications précédentes, caractérisé en ce que le châssis enclipsable (126) comporte dans le plan de la patte de fixation (135) qui déborde de la surface de plaque (128), une découpe (136) et en ce que le composant électrique (112) prévu sur la surface de plaque (129) en regard est placé par une liaison par la forme, dans la cavité (134) du châssis enclipsable élastiquement (126).

9. Dispositif selon l'une des revendications précédentes, caractérisé en ce que l'épaisseur de la patte de fixation (135) entre la surface d'étanchéité (139) jusqu'à la surface de plaque (128), libre, est inférieure à l'épaisseur du châssis enclipsable (126) entre l'autre surface de plaque (129) jusqu'à l'autre surface d'étanchéité (140) en regard.

10. Dispositif selon l'une des revendications précédentes, caractérisé en ce que le châssis rabattable (127) comporte un fond (141) appliqué contre la surface de plaque (128) de la plaque de circuit imprimé (108) par une surface d'étanchéité (139) et un couvercle (142) comportant l'autre surface d'étanchéité (140), appliquée contre l'autre surface de plaque (129), ce couvercle étant fixé par accrochage dans une partie en contre-dépouille (145) d'une branche latérale (144) en forme de châssis du fond (141).

11. Dispositif selon l'une des revendications précédentes, caractérisé en ce que le fond (141) qui entoure la plaque de circuit imprimé (108) et le couvercle (142) du châssis basculant (127) sont reliés par une charnière (143) et sont de préférence réalisés en une seule pièce.

12. Dispositif selon l'une des revendications précédentes, caractérisé en ce que le composant électrique constitué de préférence par une diode électroluminescente (112) est prévu sur le bord (138) tourné vers la charnière (143) du fond (141) et le couvercle (142) de la plaque de circuit imprimé (108).

13. Dispositif selon l'une des revendications précédentes, caractérisé en ce que la branche latérale (144) qui déborde du couvercle (142) sur le fond (141) est prévue sur trois côtés et la charnière (143) est prévue sur le quatrième côté du châssis basculant (127) rectangulaire.

14. Dispositif selon l'une des revendications précédentes, caractérisé en ce que l'épaisseur du couvercle (142) est égale ou supérieure à l'épaisseur du fond (141) du châssis basculant (127).

FIG. 3

FIG. 4

FIG. 1

FIG. 2

FIG. 5

FIG. 6

EP 0 287 703 B1

FIG. 7

FIG. 9

FIG. 10

FIG. 8

FIG. 11